Europäisches Patentamt

European Patent Office

Office européen des brevets

(19)

(11) Numéro de publication: **0 035 431**
A2

# DEMANDE DE BREVET EUROPEEN

(21) Numéro de dépôt: 81400265.5

(22) Date de dépôt: 20.02.81

(51) Int. Cl.³: **C 10 L 5/44,** F 02 B 43/08, F 24 H 1/00

(30) Priorité: 21.02.80 FR 8003870
20.01.81 FR 8100956

(71) Demandeur: **Marcelot, Jean-Pierre, Soulaine-Dhuys, F-10200 Bar Sur Aube (FR)**

(43) Date de publication de la demande: **09.09.81 Bulletin 81/36**

(72) Inventeur: **Marcelot, Jean-Pierre, Soulaine-Dhuys, F-10200 Bar Sur Aube (FR)**

(84) Etats contractants désignés: **AT BE CH DE FR GB IT LI LU NL**

(74) Mandataire: **Robert, Jean-Pierre et al, CABINET BEAU DE LOMENIE 55, rue d'Amsterdam, F-75008 Paris (FR)**

(54) **Procédé de fabrication de granulés combustibles et dispositifs d'utilisation domestique et industrielle.**

(57) L'invention concerne un procédé de granulation de la paille pour en faire un combustible dans lequel on ajoute à la paille des déchets de sucrerie, et/ou des déchets d'industrie papetière, et/ou des dérives d'hydrocarbures lourds.

Elle concerne aussi notamment, l'utilisation de ces granulés comme combustible dans un gazogène (2), installé sur un véhicule (1) par le moyen d'un réservoir de stockage (3) et d'une alimentation (4).

Application dans le domaine des énergies nouvelles.

Procédé de fabrication de granulés combustibles et dispositifs d'utilisation domestique et industrielle.

La présente invention concerne un procédé de fabrication de granulés combustibles et des installations d'utilisation du combustible issu du procédé.

Il est connu de transformer certains végétaux, ou matériaux cellulosiques en granulés destinés notamment à constituer un combustible. Tous les procédés connus à ce jour pour réaliser cette granulation consistent à préparer une matière à un taux d'humidité bien déterminé (généralement supérieur à 15 %) et à la passer sous pression au travers d'une filière puis à sécher les granulés formés pour les stocker.

L'invention propose un procédé beaucoup moins complexe dont les deux éléments importants sont :

- de la paille de céréale, utilisée comme matériau de base,

- l'emploi d'une machine de granulation connue dans le domaine de l'alimentation du bétail particulièrement de la luzerne déshydratée. Le choix de la paille de céréale résulte de la qualité de la paille ne retenir que très peu d'humidité (le taux est inférieur à 10 %). Il suffit alors de hacher directement cette paille sans dépenser d'énergie pour la sécher avant de la traiter au moyen de la machine susdite, qui contrairement à toutes les autres installations produisant du granulé de végétaux combustibles, traite un produit sec.

A cet effet, l'invention a pour premier objet un procédé consistant à traiter de la paille de céréales au moyen d'une machine de hachage et de granulation à sec dont l'usage est connu dans le domaine de l'alimentation du bétail. Selon l'une des variantes de l'invention, on introduit entre le hachage et la granulation de la paille, au moins un adjuvant constitué par des sous produits, voire des déchets de sucrerie et de distillerie des betteraves telles que de la vinasse et/ou de la mélasse dans une proportion comprise entre 5 et 20 % en poids de paille.

Il est également avantageux d'introduire dans ce mélange, en complément de l'adjuvant précédent, des sous-produits ou déchets (issues) provenant de la fabrication de la pâte à papier, dans une proportion également comprise entre 5 et 20 % en poids du mélange à granuler.

Par ailleurs, on pourra également ajouter au mélange constitué par la paille et les adjuvants précédents, des dérivés d'hydrocarbures communément connus sous l'appellation "fuel lourd numéro 2" dans une proportion également comprise entre 5 et 20 % en poids.

On notera, à propos de cette dernière addition, que la quantité introduite sera fortement influencée par la contrainte économique que représente le coût du fuel lourd en regard du coût total du combustible. En effet, le fuel lourd est d'un cours extrêmement variable et il peut arriver qu'à son cours le plus bas, le coût de la calorie qu'il fournit soit voisin, voire inférieur à celui de celle délivrée par la paille elle-même. Dans ce cas, on ajoutera la plus grande quantité possible de fuel (au voisinage de 20 %) alors que l'on fera baisser cette proportion lorsque le fuel renchérira.

Ces adjuvants ont pour principaux avantages d'une part, d'être bon marché puisque considérés comme des déchets, d'autre part, d'augmenter le pouvoir calorifique du combustible et enfin, notamment pour les déchets de l'industrie sucrière, de renforcer la cohésion mécanique du granulé.

L'invention a également pour second objet, une installation d'utilisation de ces granulés en tant que combustibles pour véhicules automobiles (notamment pour camions). Cette installation met en oeuvre un gazogène, un réservoir de granulés et un dispositif reliant le réservoir au gazogène, un réservoir de granulés et un dispositif reliant le réservoir au gazogène pour l'alimenter en granulés.

Enfin, la présente invention a pour troisième objet, une installation de chauffage et plus particulièrement un dispositif d'alimentation automatique d'une chaudière en granulés. Cette alimentation est réalisée de manière séquentielle par une commande temporisée du fonctionnement du moteur d'entraînement d'un extracteur à vis reliant un réservoir de granulés à une chaudière. Cette commande selon la présente invention, est assurée par un un dispositif d'alimentation en courant électrique du moteur constitué par :

　　　　　　　　　- une ligne d'alimentation dudit moteur comportant deux branches en parallèle, chacune d'elles étant équipée d'un contact commandé à la fermeture par un relais temporisé,

　　　　　　　　　- une première ligne de commande comportant en série l'enroulement d'un relais et un premier interrupteur commandé à l'ouverture par un premier thermostat de fumées lorsque la température de ces dernières est supérieure à une valeur déterminée,

　　　　　　　　　- une seconde ligne de commande comportant en série l'enroulement de l'autre relais et un second interrupteur commandé à l'ouverture par un second thermostat de fumées lorsque la température de ces dernières est supérieure à une valeur déterminée inférieure à la précédente,

　　　　　　　　　- et un commutateur, mettant sélectivement sous tension l'une et l'autre desdites lignes de commande, piloté par un thermostat d'eau à seuil réglable, la première ligne étant sous tension lorsque la température de l'eau est inférieure à la valeur du seuil susdit, la seconde étant connectée au réseau lorsque ladite température est inférieure audit seuil.

　　　　　　　　　D'autres caractéristiques et avantages de l'invention seront dégagés au cours de la description donnée ci-après à titre d'exemple purement indicatif et non limitatif.

　　　　　　　　　Il sera fait référence aux dessins annexés dans lesquels :

　　　　　　　　　- la figure 1 illustre schématiquement une installation d'utilisation des granulés selon l'invention en tant que combustible pour véhicule automobile,

　　　　　　　　　- les figures 2 et 3 illustrent schématiquement deux variantes d'une installation de chauffage par production d'eau chaude utilisant lesdits granulés.

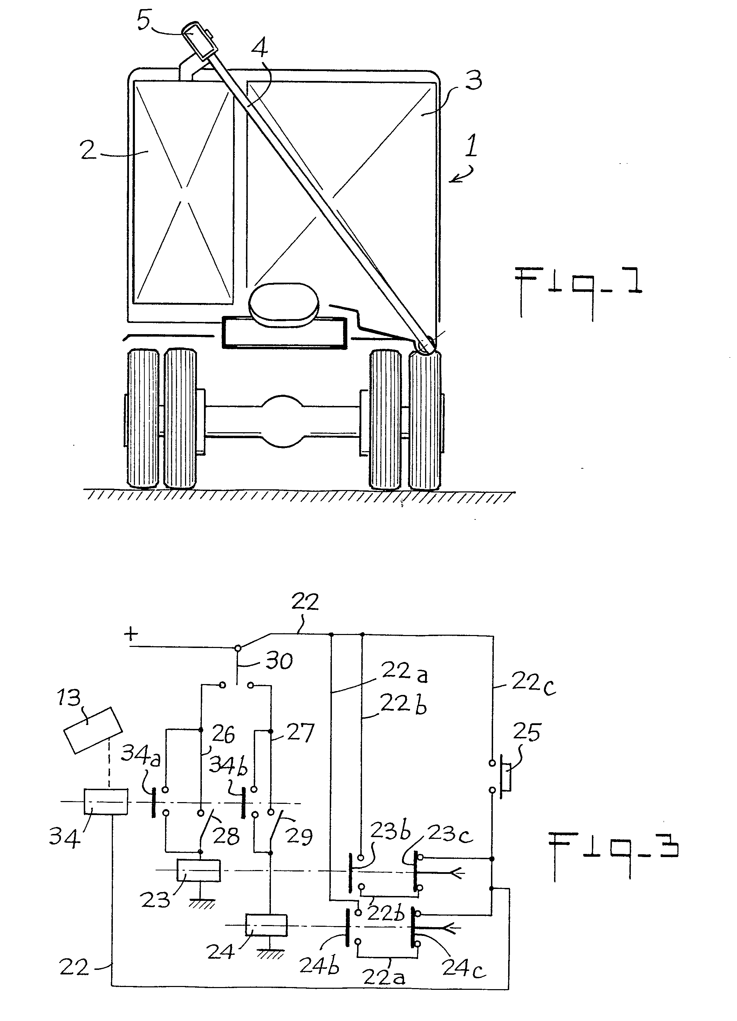

　　　　　　　　　En se reportant tout d'abord à la figure 1, on voit de l'arrière un véhicule tracteur 1, (par exemple de semi-remorque) équipé derrière sa cabine d'un gazogène 2, relié à un réservoir 3 par un système d'alimentation représenté ici sous la forme d'une vis d'archimède enfermée dans un tube 4 et actionnée en rotation par un moteur électrique 5. La commande en rotation dudit moteur 5 peut être soit manuelle en fonction de l'état d'un indicateur de marche du gazogène qui alerte le conducteur du camion, soit
automatique au moyen d'une sonde non représentée émettant en sortie
un signal significatif du niveau de remplissage du gazogène ou du
moins de la comparaison de ce niveau par rapport à un seuil déterminé au-dessous duquel il faut réalimenter. Les produits issus du
gazogène sont ensuite utilisés de manière connue, pour l'alimentation
des chambres de combustion du moteur (généralement avec un apport
d'appoint en fuel).

Cette application selon l'invention des granulés présente de nombreux avantages par rapport aux gazogènes fonctionnant au bois. Du point de vue fonctionnement tout d'abord, le granulé
de paille est un produit beaucoup plus sec que le bois si bien
qu'il ne se produit pratiquement pas de condensation ou de formation
de goudrons. Le gazogène est donc d'un entretien beaucoup     simplifié. En outre, le stockage du produit granulé occupe un volume
deux fois moindre que le bois pour un même poids et donc un même
apport d'énergie. L'autonomie du véhicule est de ce fait pratiquement
doublée. Enfin, du point de vue manutention et distribution, le granulé permet une automatisation extrêmement poussée de l'alimentation du
gazogène (alors que ceux fonctionnant au bois sont à charger à la
main par sac) et un stockage dans des silos de dristribution le
long des routes extrêmement simples à installer et pouvant délivrer
automatiquement, avec pesée et calcul du prix, la quantité désirée
de granulé. On voit ainsi que le granulé de paille présente presque
toutes les commodités de stockage, de distribution et d'utilisation
d'un combustible liquide. Sa distribution peut donc facilement s'implanter en parallèle avec les postes de distribution d'essence ou
de gazole.

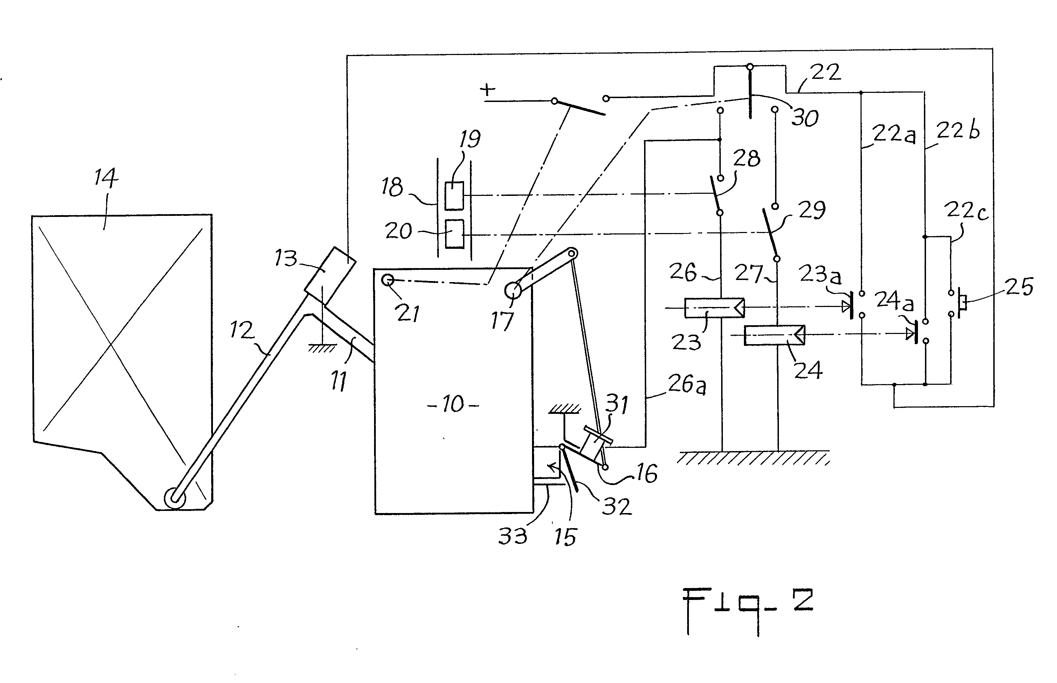

Sur la figure 2, on reconnaîtra une chaudière
10, connectée à un tube 11 d'alimentation de son foyer lui-même
provenant d'un système à vis d'Archimède enfermée dans un tube 12
et entraînée en rotation par un moteur électrique 13. La vis est
issue de la base d'un silo 14 de stockage.

La chaudière 10 comporte un conduit d'entrée
d'air de combustion dont l'entrée est plus ou moins ouverte, de manière
connue par un volet 16 dont la position est asservie à la valeur

**0035431**

de réglage d'un thermostat 17 d'eau. La chaudière comporte également un conduit de fumées 18 dans lequel on a placé deux thermostats 19 et 20 de fumées. On entendra par thermostats, des capteurs à seuil réglable de température, qui ferment ou ouvrent un contact électrique lorsque la température captée est différente de celle affichée. Un second thermostat d'eau 21 est placé sur la chaudière.

L'alimentation électrique du moteur 13 est assurée par une ligne 22 divisée en trois branches parallèles 22a, 22b, 22c, respectivement équipées d'un contact 23a, 24b et 25, les deux premiers étant associés à un relais 23, 24, le troisième 25 étant un contact à commande manuelle du type bouton-poussoir ouvert au repos.

Les enroulements des relais 23 et 24 sont respectivement placés sur des lignes de commande 26, 27 en série avec un interrupteur 28, 29. L'interrupteur 28 est commandé à la fermeture lorsque la température détectée par le thermostat 19 est inférieure à un certain seuil (par exemple 120 ou 130°). De même, l'interrupteur 28 est commandé à la fermeture lorsque la température détectée par le thermostat 20 est inférieure à un autre seuil lui-même inférieur au premier (par exemple 50 ou 60°). Les lignes 26 et 27 sont mises sous tension sélectivement au moyen d'un commutateur-basculeur 30 commandé par le thermostat d'eau 17. Ainsi, lorsque l'eau de la chaudière est à une température inférieure à celle affichée au thermostat 17 (par exemple 60°), le commutateur connecte la ligne 26 à l'alimentation. Si cette température est supérieure à celle affichée, alors le commutateur connecte la ligne 27 à la source (réseau).

On notera en outre que le thermostat 21 est un thermostat de sécurité interrompant la ligne d'alimentation 22 si la température de l'eau excède un certain seuil.

Enfin, entre le commutateur 30 et le contact 28, la ligne 26 possède une dérivation 26a d'alimentation de l'enroulement d'un électro-aimant 31, solidaire du volet 16. On notera qu'un volet secondaire 32 est disposé entre le volet 16 et le conduit 15. Lorsque l'aimant 31 est excité, le volet 32 est collé avec le volet 16 et se déplace avec lui. En revanche, lorsque l'aimant n'est pas excité, le volet 32 tombe sous l'effet de son propre poids contre une butée 33 en restreignant l'ouverture du conduit 15

6                                    0035431

à une valeur minimale.

Le fonctionnement du dispositif supposera affichés 60° au thermostat 17, 120° au thermostat 19, 60° au thermostat 20. On crée un feu dans le foyer et en actionnant le bouton 25, on provoque une rotation forcée de la vis et donc une alimentation du foyer permettant un échauffement rapide de l'eau. La chaudière étant donc mise en service mais l'eau n'ayant pas atteint 60°, le commutateur 30 est sur la ligne 26. Le volet 32 est plaqué contre le volet 16. Lorsque la température des fumées descend au-dessous de 120°, ce qui est significatif d'une demande de combustible au foyer, le contact 28 se ferme et le relais 23 est alimenté. Le contact 23a est fermé et la vis tourne pendant un temps correspondant au temps que mettront les fumées à monter à une température supérieure à 120° pour ouvrir le contact 28 augmenté du temps de vaporisation réglable au bout duquel le contact 23a s'ouvrira à nouveau. Ce temps, compte-tenu du débit de la vis correspond à une quantité de combustible déterminée qui sera alimenté à une fréquence d'autant plus haute que la température affichée au thermostat 19 sera élevée.

La température de l'eau ayant atteint, voire dépassé 60°, le commutateur 30 bascule sur la ligne 27 qui ne se fermera que lorsque le contact 29 aura été manoeuvré par le thermostat 20, donc quand la température des fumées sera descendue au-dessous de 60°. En outre, le basculement de 30 coupe l'alimentation de la bobine 31 et le volet 32 retombe sur la butée 33, restreignant la section d'alimentation en air. La quantité de combustible alimenté par la vis dont le moteur est actionné par le contact 24a dépend, comme dans le cas précédent, de la remontée en température des fumées et de la temporisation du relais. On voit que dans ce cas de fonctionnement, on assure une combustion ralentie d'entretien du feu, l'installation n'étant pas demanderesse de calories.

Sur la figure 3 qui illustre une variante de réalisation de la figure 2, on retrouve certains des éléments déjà décrits avec les mêmes références. On voit que chacune des branches 22a, 22b, possède en série un contact 23b, 24b simple, normalement ouvert et un contact 23c, 24c, normalement fermé à ouverture retardée. En outre, la ligne 22 d'alimentation du moteur 13 possède en série ou en parallèle avec ce dernier, l'enroulement d'un relais 34, commandant

0035431

à la fermeture des contacts 34a et 34b normalement ouverts, placés en parallèle sur les interrupteurs 28 et 29 des lignes 26 et 27. Ainsi, lors d'une fermeture de la ligne 26 par l'interrupteur 28 (baisse des températures de fumées au-dessous du seuil), le relais 23 actionne le contact 23b à la fermeture et le moteur 13 est alimenté. Dans ce temps, le relais 34 ferme les contacts 34a et 34b et le relais 23 continuera d'être sous tension même si l'interrupteur 28 s'ouvre. Au bout du temps de temporisation, le contact 23c va s'ouvrir, coupant l'alimentation du moteur 13, le contact 34a s'ouvrira également et le relais 23 ne sera plus alimenté si l'interrupteur 28 est ouvert. Le contact 23b s'ouvre en même temps que le contact 23c se ferme. Dans le cas où l'interrupteur 28 resterait fermé (par manque de feu), le relais 23 resterait alimenté et le contact 23c ne se fermerait pas. Une nouvelle alimentation de la chaudière est alors rendue impossible tant que l'interrupteur 28 ne s'est pas ouvert donc tant qu'il n'y a pas eu un rallumage.

Ce fonctionnement expliqué pour ce qui concerne la ligne 26 est identique à celui relatif à la ligne 27.

L'invention trouve une application intéressante dans le domaine des énergies nouvelles.

Elle n'est pas limitée à la description qui vient d'en être donnée mais couvre au contraire toutes les variantes qui pourraient lui être apportées sans sortir de son cadre ni de son esprit.

0035431

R E V E N D I C A T I O N S

1.          Procédé de fabrication de granulés combustibles constitués de paille de céréales, caractérisé en ce qu'il consiste à traiter lesdites substances au moyen d'une machine de hachage et de granulation à sec connue en elle-même pour la fabrication d'aliments du bétail à base de luzerne déshydratée.

2.          Procédé de fabrication de granulés combustibles selon la revendication 1, caractérisé en ce que l'on introduit entre le hachage et la granulation de la paille, au moins un adjuvant constitué par des issues de sucrerie et distillerie de betteraves telles que vinasse ou mélasse dans une proportion comprise entre 5 et 20 % en poids.

3.          Procédé selon la revendication 2, caractérisé en ce que l'on introduit en outre dans le mélange destiné à la granulation, des issues de fabrication de pâte à papier dans une proportion comprise entre 5 et 20 % en poids.

4.          Procédé selon la revendication 2 ou la revendication 3, caractérisé en ce que l'on introduit dans le mélange destiné à la granulation, des dérivés d'hydrocarbures dénommés communément "fuel lourd n° 2" dans une proportion comprise entre 5 et 20 % en poids.

5.          Installation d'utilisation en tant que combustible pour véhicules (1) automobiles, des granulés issus du procédé selon l'une quelconque des revendications précédentes, caractérisée en ce qu'elle comporte un gazogène (2), un réservoir (3) de granulés et un dispositif d'alimentation (4) du gazogène issu du réservoir.

6.          Installation selon la revendication 5, caractérisée en ce que le dispositif d'alimentation susdit est constitué par une vis d'extraction.

7.          Installation selon la revendication 6, caractérisée en ce que ladite vis est entraînée en rotation au moyen d'un moteur (5) dont le fonctionnement est asservi au taux de remplissage du gazogène.

8.          Installation de chauffage utilisant en tant que combustible, les granulés issus du procédé selon l'une quelconque des revendications 1 à 4, caractérisée en ce qu'elle comporte :

- un réservoir de stockage (14),

- un extracteur à vis issu dudit réservoir (12),

- un moteur électrique d'entraînement (13) en rotation dudit extracteur,

- une chaudière (10) connectée à la sortie dudit extracteur,

- et un dispositif d'alimentation en courant électrique temporisée dudit moteur d'entraînement, qui est constitué par une ligne d'alimentation (22) dudit moteur, comportant deux branches (22a, 22b) en parallèle, chacune d'elles étant équipée d'un contact (23a, 24a), commandé à la fermeture par un relais temporisé (23, 24), par une première ligne (26) de commande comportant en série l'enroulement d'un relais (23) et un premier interrupteur (28) commandé à l'ouverture par un premier thermostat (19) de fumées lorsque la température de ces dernières est supérieure à une valeur prédéterminée, par une seconde ligne de commande (27) comportant en série l'enroulement (24) de l'autre relais et un second interrupteur (29) commandé à l'ouverture par un second thermostat (20) de fumées lorsque la température de ces dernières est supérieure à une valeur prédéterminée inférieure à la précédente et par un commutateur (30) mettant sélectivement sous tension l'une et l'autre desdites lignes de commande ; piloté par un thermostat d'eau (17) à seuil réglable, la première ligne (26) étant connectée au réseau par le commutateur (30) lorsque la température de l'eau est inférieure à la valeur du seuil susdit, la seconde (27) étant connectée au réseau lorsque ladite température est inférieure audit seuil.

9. Installation de chauffage selon la revendication 8, caractérisée en ce que le dispositif d'alimentation temporisée susdit comporte un interrupteur général commandé à l'ouverture par un thermostat (21) d'eau secondaire lorsque la température de cette dernière est supérieure à une valeur prédéterminée.

10. Installation de chauffage selon la revendication 8, ou la revendication 9, caractérisée en ce que la chaudière comporte de manière connue en elle-même, un volet (16) de réglage d'admission d'air dont la position est asservie à la valeur de température affichée sur le thermostat d'eau. (17) susdit et en ce que ce volet comporte un volet secondaire (32) rendu solidaire du volet principal et plaqué sur celui-ci au moyen d'un électroaimant (31) porté par le volet principal alimenté lorsque la première ligne (26) est mise en service par le commutateur (30) et non excité lorsque la seconde ligne (27) est mise en service, le volet secondaire (32) prenant sous l'effet de son propre poids une position dans laquelle la section de l'ouverture d'admission d'air est réduite.

11.          Installation selon l'une quelconque des revendications 8 à 10, caractérisée en ce que la ligne d'alimentation susdite du moteur comporte une troisième branche (22c) en parallèle sur les deux autres, pourvue d'un interrupteur (25) normalement ouvert à actionnement manuel.

12.          Installation de chauffage selon la revendication 8, caractérisée en ce que chacun des contacts des branches susdites de la ligne d'alimentation est constitué par un contact simple (23b 24b) normalement ouvert disposé en série avec un contact normalement fermé, à ouverture temporisée (23c, 24b) et en ce que chacune des première (26) et seconde (27) lignes de commande, comporte en parallèle sur les premier (28) et second (29) interrupteurs, un contact (34a, 34b) normalement ouvert, commandé à la fermeture par un relais (34) dont l'enroulement est disposé sur la ligne (22) d'alimentation du moteur (13).

Fig-1

Fig-3

Fig. 2

2/2

0035431